# EUROPEAN PATENT APPLICATION

(11) **EP 2 138 037 A2**
(43) Date of publication of application: **30.12.2009**
(21) Application number: 08462005.3
(22) Date of filing: 19.08.2008
(51) Int. Cl.: A01M 19/00, A01M 1/22

(54) **Electric sprayer**

(30) Priority: 29.08.2007 HU 0700694
(71) Applicant: Ludas, Ferenc, 2890 Tata (HU)
(72) Inventor: Ludas, Ferenc, 2890 Tata (HU)

(57) **Abstract**

This electronic sprayer uses a 12 V battery (2) to operate a high voltage fuse transformer (11), the negative and positive poles of which are connected with metal by means of sprayer arms (10) with metal panels (18) on them. By turning on the pump (12) on the equipment the sprayer heads (13) on the sprayer arms (10) create a mist-like liquid and after turning on the voltage regulator (7) short-circuit is created, which creates step voltage.

The sprayer arms (10) are exchangeable and can be replaced by two conductor probes (20, 21) and by sticking them into the ground we can also create step voltage.

With the help of the conductor probes (20, 21)we can create step voltage on still waters as well.

## Description

a) Electric sprayer
b) Agriculture: growing plants and fruit
c) Mechanical chemical spraying, manual chemical spraying
d) Exterminate plant pests in soil and still waters (e.g.: exterminating ants and mosquito larva etc.) without the use of pesticides, by using electricity.
e) Exterminating plant pests without the use of pesticides. By turning on the voltage regulator of the electric sprayer, high voltage direct current is created between the two arms which is short-circuited by the fine mist produced by the pump. Thus step voltage is generated which kills pests in between its negative and positive poles.
f) 1/1 The electric sprayer from above.
   1/2 Side view of the sprayer arms and the conductor probes.
g) A 12 V battery and charger is mounted on a 20x40 cm plastic panel. In the middle of the plastic panel, beside the 12 V high voltage transformer, there are the main switch, the voltage regulator switch and the pump switch. The pump is at the end of the panel and next to it there are the two sprayer arms bolted on the panel which are connected to the pump in the middle with flexible plastic pipes. The water tank is between the pump and the transformer.
   There are three sprayer heads on each arm, which are mounted into the metal panel on the arms. In the middle of the plastic panel, on the two sides, we can find the two belt carriers with the belt on them. By loosening the bolts of the arms we can adjust the distance between the arms. The sprayer is also equipped with two metal electric-probes with wires.
h) In case of industrial application, where electricity is given, higher performance is possible with the help of machines, with a larger water tank and by increasing the voltage and the distance between the heads.
i) Unlike the present pesticide spraying, this kind of spraying is cheap and environment friendly. It can kill pests and mosquito larvae also in still waters and soil.

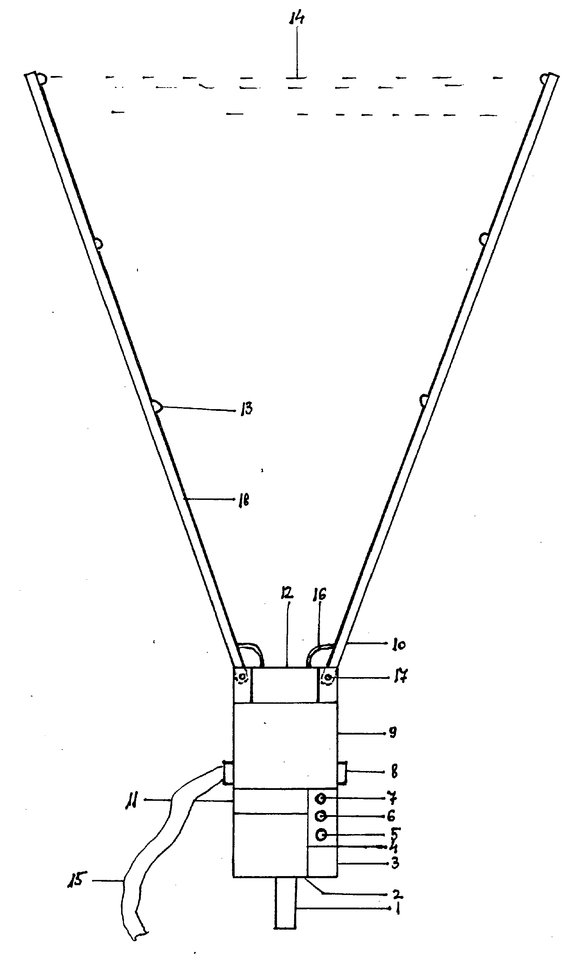

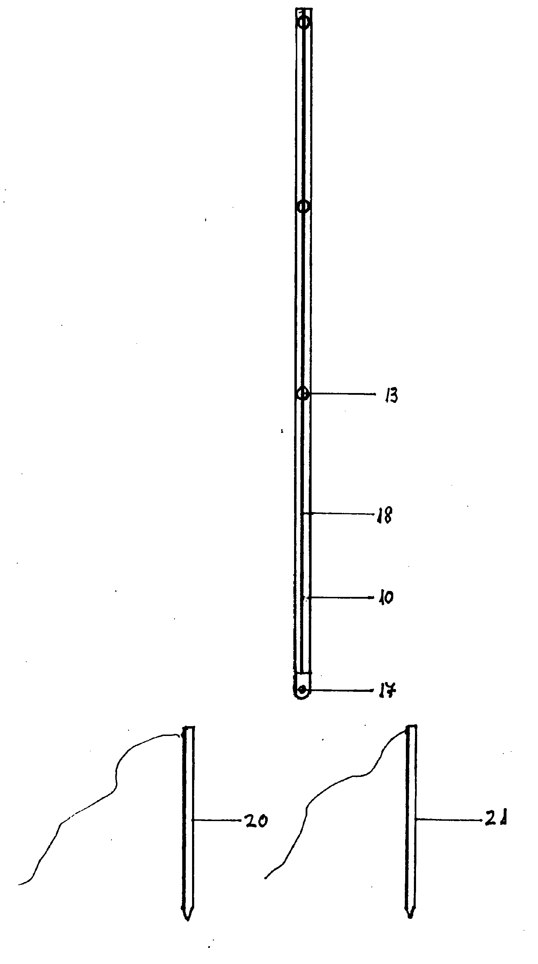

## Claims

1. Unlike chemical sprayers, this electronic sprayer operated from a rechargeable battery (2) or from mains (3) creates step voltage by generating alternating direct voltage (7) and spraying non-chemical liquid (14) between the negative and positive poles and thus exterminates plant pests.

2. The electronic sprayer in claim 1 comprising a rechargeable battery (2) and mains (3) to be operated from. ,

3. The electronic sprayer in claim 1 comprising a water pump (12), pump switch (6), voltage regulator switch (7) and a main switch (5).

4. The electronic sprayer in claim 1 comprising a fuse transformer (11) which creates high voltage by means of a 12 V battery.

5. The electronic sprayer in claim 1 comprising a plastic panel (18) with two bolts (17) on the corners with the help of which the distance between the two sprayer arms (10) with metal panels on them can be adjusted.

6. The electronic sprayer in claim 1 comprising sprayer arms (10) with metal panels (18) with threads for fine mist sprayer heads (13).

7. The electronic sprayer in claim 1 comprising sprayer heads (13) on the sprayer arms (10) which are equipped with a lid (19) in case of reduced spraying.

8. The electronic sprayer in claim 1 comprising a water tank (9) on the on the plastic panel (18) which provides the spray liquid.

9. The electronic sprayer in claim 1 comprising sprayer arms (10) with metal panels (18) and a water pump (12) which are connected with a flexible pipe.

10. The electronic sprayer in claim 1 comprising the two sprayer arms (10) with metal panels (18) which can be dismantled to put two conductor probes (20, 21) in their place.

11. The electronic sprayer in claim 1 comprising a belt (15) in the middle of the plastic panel (4) and thus can be hung on the shoulders.
